# EUROPEAN PATENT SPECIFICATION

(11) **EP 3 690 812 B1**
(45) Date of publication and mention of the grant of the patent: **17.12.2025**
(21) Application number: 18858786.9
(22) Date of filing: 26.07.2018
(51) Int. Cl.: G06T 7/593, G01C 3/08, G01C 11/06

(54) **OBJECT DISTANCE DETECTION DEVICE**
VORRICHTUNG ZUR ERKENNUNG EINER OBJEKTENTFERNUNG
DISPOSITIF DE DÉTECTION DE DISTANCE D'OBJET

(30) Priority: 25.09.2017 JP 2017183161
(43) Date of publication of application: 05.08.2020
(73) Proprietor: Astemo, Ltd., Tokyo 100-0004 (JP)
(72) Inventor: SASAMOTO Manabu, Tokyo 100-8280 (JP); MATSUO Shigeru, Tokyo 100-8280 (JP); KIDO Hideaki, Tokyo 100-8280 (JP); NONAKA Shinichi, Hitachinaka-shi Ibaraki 312-8503 (JP)
(74) Representative: MERH-IP Matias Erny Reichl Hoffmann Patentanwälte PartG mbB
(86) International application number: PCT/JP2018/028027
(87) International publication number: WO 2019/058755

(56) References cited:
- JP-A- 2001 043 495
- JP-A- 2001 043 495
- JP-A- 2001 071 790
- JP-A- 2001 071 790
- JP-A- 2013 185 905
- JP-A- 2013 185 905
- JP-A- 2017 151 541
- JP-A- 2017 151 541

## Description

### Technical Field

The present invention relates to an object distance detection device.

### Background Art

As background art of this technical field, for example, PTL 1 proposes a technique for suppressing an-increase in the amount of calculation in distance detection by a stereo camera.

Specifically, PTL 1 describes that an image is reduced, stereo distance detection is performed with a reduced image whose resolution has been reduced, and stereo distance detection is performed by dividing a region with an image whose resolution is not reduced. PTL 2 relates to a depth information acquisition unit, which acquires depth information for each of a plurality of pixels constituting an image. PTL 3 relates to a stereo-type out of vehicle monitoring device, by which the road surface situation of a travelling road shall be detected with precision from picked-up images. PTL 4 relates to a vehicular display device that enables easy recognition of obstructions existing far from one's own vehicle.

### Citation List

### Patent Literature

PTL 1: JP 2015-230703 A
PTL 2: JP 2013-185905 A
PTL 3: JP 2001-043495 A
PTL 4: JP 2001-071790 A

### Summary of Invention

### Technical Problem

Since the technique described in PTL 1 reduces the image and performs the distance detection with the image whose resolution has been reduced, computational load can be reduced, but there is a risk that the accuracy of a detected distance may be lowered regardless of the distance of a subject because the amount of information is reduced. Further, a processing circuit configured to reduce the image is required.

Therefore, an object of the present invention is to provide an object distance detection device with which object detection accuracy can be improved and computational load can be decreased.

### Solution to Problem

In particular, it is provided an object distance detection device having the features defined in claim 1. Further preferred embodiments are defined in the dependent claims.

### Advantageous Effects of Invention

The present invention can provide the object distance detection device with which the object detection accuracy can be improved and the computational load can be decreased.

### Brief Description of Drawings

[FIG. 1] FIG. 1 is a diagram illustrating a configuration of an object distance detection device according to an embodiment of the present invention.
[FIG. 2] FIG. 2 is a view illustrating an example of a captured image captured in the embodiment of the present invention.
[FIG. 3] FIG. 3 is a view illustrating examples of the captured image captured in the embodiment of the present invention and region control.
[FIG. 4] FIG. 4 is a view illustrating examples of another captured image captured in the embodiment of the present invention and region control.
[FIG. 5] FIG. 5 is a view illustrating processing timings of the object distance detection device according to the embodiment of the present invention.
[FIG. 6] FIG. 6 is a view illustrating a processing flow of the object distance detection device according to the embodiment of the present invention.
[FIG. 7] FIG. 7 is a view illustrating examples of a captured image and a recognition result according to the embodiment of the present invention.
[FIG. 8] FIG. 8 is a view illustrating examples of current consumption according to the embodiment of the present invention.
[FIG. 9] FIG. 9 is a diagram illustrating a configuration of an object distance detection device according to another embodiment of the present invention.
[FIG. 10] FIG. 10 is a diagram illustrating a configuration of an object distance detection device according to another embodiment of the present invention.
[FIG. 11] FIG. 11 is a diagram illustrating a configuration of an object distance detection device according to another embodiment of the present invention.
[FIG. 12] FIG. 12 is a diagram illustrating a configuration of an object distance detection device according to another embodiment of the present invention.

### Description of Embodiments

Hereinafter, embodiments of the present invention will be described with reference to the drawings.

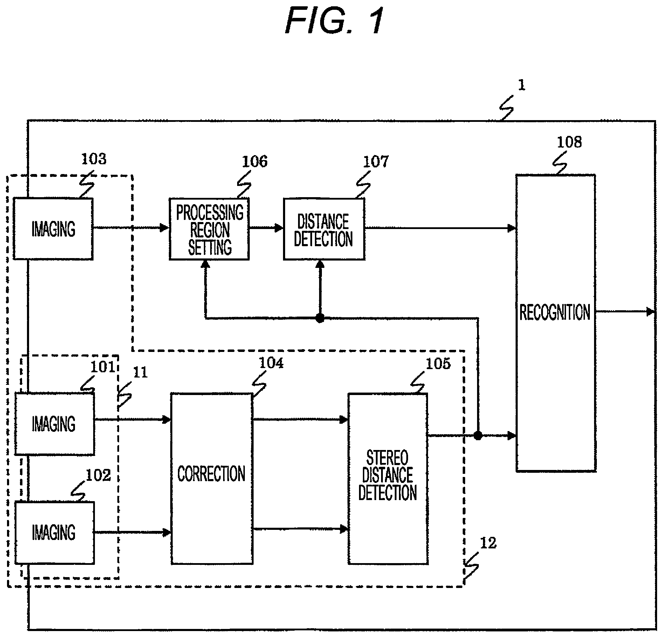

FIG. 1 is a diagram illustrating a configuration of one embodiment of an object distance detection device of the present invention. Reference sign 1 denotes an object distance detection device of the present embodiment, which is mounted in front part of a vehicle, for example, and is configured as a part of a safety system that assists a driver by recognizing a signal, a sign, an obstacle, and the like.

Reference signs 101, 102, and 103 denote imaging units each of which has an optical lens attached to an image sensor. These imaging units repeatedly capture one image at a predetermined timing and output the captured image. The imaging unit 101 and the imaging unit 102 are installed at a predetermined distance from each other to the left and right, and a distance to a subject can be calculated based on a shift, that is, so-called parallax between images captured by the imaging unit 101 and the imaging unit 102.

Incidentally, FIG. 1 illustrates an example in which the components of the object distance detection device 1 are housed in the same housing, but the imaging units 101 and 102, for example, may be housed together in a separate housing from the other components (a dotted frame 11 in the same drawing), and the imaging units 101, 102, and 103 may be housed in separate housings and attached to the vehicle. In such a case, an image signal may be connected by a connection cable (not illustrated). As a method of transmitting an image using the connection cable, there is a transmission method using a differential transmission path of a low voltage differential signaling (LVDS) system.

Further, as the image sensors of the imaging unit 101 and the imaging units 102 and 103 are configured as color image sensors, color information of the captured images can be acquired, and a traffic signal and a state of a tail light of a preceding vehicle can be determined from the color information as well as luminance information.

Reference sign 104 denotes an image correction unit, which obtains images from the imaging units 101 and 102, corrects the images using a correction value measured in advance so as to make the luminances of the respective images match each other, corrects an image distortion caused by a lens, and performs correction using a correction value measured in advance so as to align horizontal positions of the images of the imaging units 101 and 102. The measurement of the correction value is performed in a manufacturing process of the object distance detection device. A specific subject is imaged for each device before being subjected to the application of the correction values, a luminance correction value for each pixel so as to make luminances of the acquired images uniform and a lens distortion are cancelled, a geometric correction value for each pixel so as to make the images horizontal is obtained, and these values are saved in a non-volatile memory (not illustrated) for each device as correction tables.

Reference sign 105 denotes a stereo distance detection unit which detects a distance to the subject and an object type by inputting the images from the image correction unit 104. Examples of a method of detecting the distance include the following method. The stereo distance detection unit 105 obtains the images from the image correction unit 104 and calculates parallax. Since the imaging unit 101 and the imaging unit 102 are installed to be separated from each other at a predetermined distance as described above, the captured images have the parallax. So-called stereo processing to calculate the parallax is performed.

Examples of a parallax calculation technique include a block matching system. Specifically, first, a region on the image of the imaging unit 102 is searched, the region corresponding to a predetermined size cut out from a designated image region of the image captured by the imaging unit 101, for example, a block region of vertically eight pixels and horizontally eight pixels. On the image of the imaging unit 102, block regions of the same size are shifted in the horizontal direction by the number of pixels designated as a search density, and a correlation value at that time is evaluated. In such a case, it is possible to control processing load and accuracy of calculation together with the designation of a processing region, for example, by setting a combination in which the search range is 128 pixels and the search density is two pixels or a combination in which the search range is 32 pixels and the search density is one pixel. If the search density is increased, the accuracy of the distance becomes coarse, but the processing load in the search range is mitigated. As the search density is decreased, the accuracy of the detected distance becomes higher.

Further, a difference between positions of the matching block regions in the imaging unit 101 and the imaging unit 102 is the parallax represented by the number of pixels. It is possible to obtain the distance in the real environment of the object reflected in the block region using this parallax. Incidentally, the block region is used as an image element whose distance is to be obtained in this example. As a matching comparison technique for evaluation of the correlation value, for example, a position where the sum of luminance differences of pixels in block regions to be compared becomes small is set as parallax.

It is well-known that the detected distance is obtained based on a focal length of the lenses of the imaging unit 101 and the imaging unit 102, a baseline length, which is the distance between the imaging unit 101 and the imaging unit 102, the parallax obtained as above and a pixel pitch of an imaging sensor. However, a distance calculation method is not limited thereto. Further, the image element whose distance is to be obtained is not limited to the above-described block region, and individual pixels constituting the imaging sensor may be employed.

In a method of detecting an object, for example, when pieces of distance information indicating almost the same distance exist nearby, those pieces of distance information are grouped as a set, and the group is regarded as an object when a size of the group is a certain level or more. Further, for example, it is detected that the object is a vehicle or a pedestrian based on the detected size and shape of the group. There is a method of detecting the size and shape of the object based on comparison with pattern data held in advance as reference data. According to this processing system, the distance of the object in front of a host vehicle, such as a pedestrian and a vehicle can be obtained with high accuracy, and thus, the distance is used as information for collision avoidance such as deceleration and stop of the host vehicle. The obtained type and distance of the object are output to a processing region setting unit 106, a distance detection unit 107, and a recognition unit 108 to be described below.

Reference sign 106 denotes the processing region setting unit which sets and cuts out a region of an image from which distance is to be detected by the distance detection unit 107 in the subsequent stage within an image captured by the imaging unit 103 set in advance or based on a result of the stereo distance detection unit 105.

Reference sign 107 denotes the distance detection unit which detects the distance to the object in the region based on the result of the stereo distance detection unit 105, the region extracted by the processing region setting unit 106. The distance detection unit 107 detects the object by monocular processing in this example, and thus, can be called a monocular distance detection unit, and detects an assumed preceding vehicle, a traffic signal, a road sign, and the like from the input image. Examples of such a detection method include a method of detecting objects, such as a vehicle, a traffic signal, and a road sign, from a luminance distribution and edge shape information in an image and a similarity degree with pattern data held as reference data. As a result, the object in the image and a position thereof on a screen can be grasped, and a distance can be detected based on a height and a size of the detected object on the screen.

Here, the distance detection unit 107 receives an input of the object type detected by the stereo distance detection unit 105, and thus, it is unnecessary to perform comparison with the pattern data configured to detect the object described above so that the processing can be reduced. Further, since the distance and the size of the object previously detected by the stereo distance detection unit 105 are input, the number of pieces of pattern data to be compared can be limited, and the distance of the object can be detected with the minimum necessary processing.

Reference sign 108 denotes the recognition unit which receives a detection result from the stereo distance detection unit 105 and a detection result from the distance detection unit 107, integrates the results, and outputs information on the recognition result to not only the outside of the object distance detection device 1 but also the processing region setting unit 106 and the distance detection unit 107. The object distance information obtained by the stereo distance detection unit 105 is updated to the corresponding object distance information obtained by the distance detection unit 107.

Although the example in which a distance group of a certain size is detected as the object as the detection result of the stereo distance detection unit 105 and this result is output to the processing region setting unit 106 and a distance setting unit 107 has been illustrated as above, the recognition result of the recognition unit 108 may be output to the processing region setting unit 106 and the distance setting unit 107.

Incidentally, in the object distance detection device 1, the imaging units 101, 102, and 103, the image correction unit 104, and the stereo distance detection unit 105 in a dotted frame 12 are configured by electronic circuits, for example, and the other components are realized by software processing using a microcomputer (not illustrated). The stereo distance detection unit 105 can also be realized by software processing.

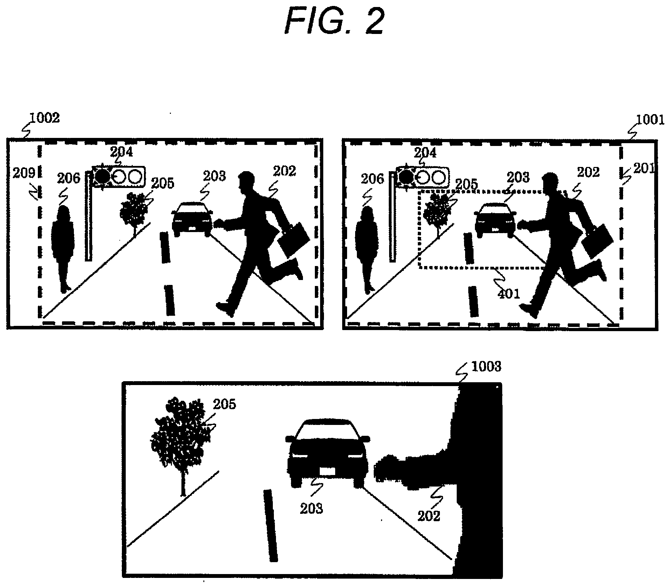

FIG. 2 is a view illustrating an example of a captured image captured by one embodiment of the object distance detection device of the present invention. In the same drawing, reference sign 1001 denotes a captured image which has been imaged by the imaging unit 101 and corrected by the image correction unit 104, and reference sign 1002 denotes a captured image which has been imaged by the imaging unit 102 and corrected by the image correction unit 104. Further, reference sign 1003 denotes a captured image which has been imaged by the imaging unit 103. Reference signs 202, 203, 204, 205, and 206 respectively denote a pedestrian, an oncoming vehicle, a traffic signal, a street tree, and a pedestrian which are subjects.

Further, reference signs 201 and 209 denote common imaging regions which are regions that are commonly imaged in the captured image 1001 and the captured image 1002. As described above, there is a shift in the commonly imaged region between the captured image 1001 and the captured image 1002, and a distance to a subject is calculated from this shift amount, that is, parallax.

The imaging unit 103 is set to have a narrower imaging angle of view than the imaging units 101 and 102, and the captured image 1003 is a captured image of a region corresponding to a region 401 indicated by a dotted frame of the common imaging region 201. When the number of pixels of the imaging sensor is the same between the imaging units 101 and 102 and the imaging unit 103, the resolution of the captured image captured by the imaging unit 103 is higher, and thus, the accuracy at the time of detecting the distance becomes higher.

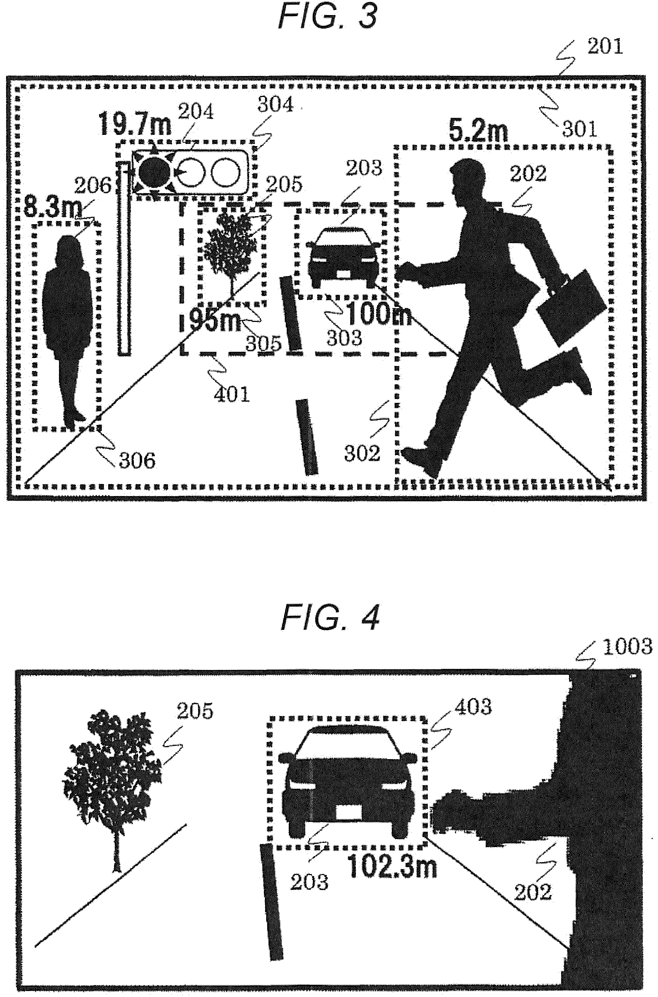

FIG. 3 is a view illustrating examples of a captured image captured by the embodiment of the object distance detection device of the present invention and an operation of the stereo distance detection unit 105. In the same drawing, reference sign 201 denotes a region, imaged in common with the image captured by the imaging unit 102 as described above, in the captured image captured by the imaging unit 101 and corrected by the image correction unit 104.

Reference sign 301 is a processing range in which the stereo distance detection unit 105 detects a distance of a subject and a type of an object, and processes the entire region 201. The stereo distance detection unit 105 obtains the parallax for the range of the processing region 301 using the above-described block matching system, and detects an object from a group of the parallax.

Reference signs 302, 303, 304, 305, and 306 denote detection results of the objects with frames. The frame and distance display in the image are not included in the captured image, but are explicitly illustrated to be superimposed on the image. It is detected that the pedestrian 202 detected in the processing region 302 is at a distance of 5.2 m, the oncoming vehicle 203 detected in the processing region 303 is at a distance of 100 m, the traffic signal 204 in the processing region 304 is at the distance of 19.7 m, the street tree 205 in the processing region 305 is at a distance of 95 m, and the pedestrian 206 in the processing region 306 is at a position of 8.3 m. In this manner, the object distance detection can be realized over the entire captured image.

The stereo distance detection unit 105 outputs the detected object type, distance, position, and the like to the processing region control unit 106 and the distance detection unit 107.

FIG. 4 is a view illustrating examples of the captured image 1003 imaged by the imaging unit 103 and operations of the processing region setting unit 106 and the distance detection unit 107. The processing region setting unit 106 selects minimum necessary object information required for the vehicle to travel safely from the object information output from the stereo distance detection unit 105, cuts out the selected object information as an image and then outputs the image to the distance detection unit 107 at the subsequent stage. In this example, the pedestrian 202, the oncoming vehicle 203, and the street tree 205 exist inside the processing region 401 illustrated in FIG. 2. Among these, information on the oncoming vehicle 203 is selected, and an image thereof is cut out and output. Reference sign 403 denotes a processing region of an image that is cut out by the processing region setting unit 106 and output to the distance detection unit 107 at the subsequent stage. The distance detection unit 107 receives information that there is a preceding vehicle at a distance of 100 m for the processing region 403, and detects the distance. As a result, the position is more accurately detected as the preceding vehicle is at the distance of 102.3 m in this example.

In this manner, the processing region setting unit 106 can reduce the amount of processing by setting a processing region, for example, when the distance to the object detected by the stereo distance detection unit 105 is farther than a predetermined distance threshold, for example, 50 m. In the present embodiment, no processing region is set for the pedestrian 202.

Further, the amount of processing can be reduced even when the processing region setting unit 106 is configured so as not to set a processing region in a case where the object detected by the stereo distance detection unit 105 is not a predetermined object, for example, for the street tree 205.

Furthermore, the amount of processing can be reduced even when the processing region setting unit 106 is configured so as not to set a processing region in a case where no object has been detected by the stereo distance detection unit 105.

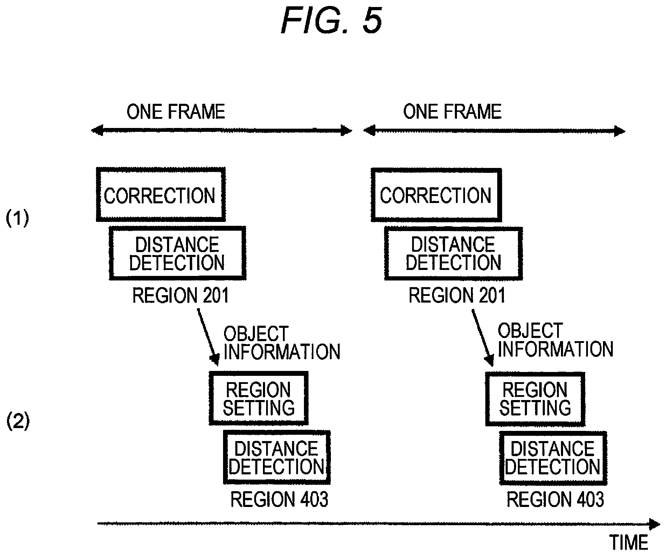

FIG. 5 is a view illustrating processing timings of one embodiment of the object distance detection device of the present invention. In the same drawing, (1) illustrates processing timings of the image correction unit 104 and the stereo distance detection unit 105, and (2) illustrates processing timings of the processing region setting unit 106 and the distance detection unit 107.

In (1), the above-described distance detection process using the image correction unit 104 and the stereo distance detection unit 105 is performed. In (2), the object information detected in (1) is received, and the distance detection unit 107 performs the distance detection for the processing region 403 designated by the processing region setting unit 106.

In this manner, the distance detection process in the distance detection unit 107 is performed only for the designated necessary processing region, and the detection process is performed based on the detection result of the stereo distance detection unit 105, and thus, the processing load can be reduced.

Incidentally, the single processing region 403 is set by the processing region setting unit 106 in the present embodiment, but the distance detection process in (2) is performed a plurality of times when a plurality of processing regions are set.

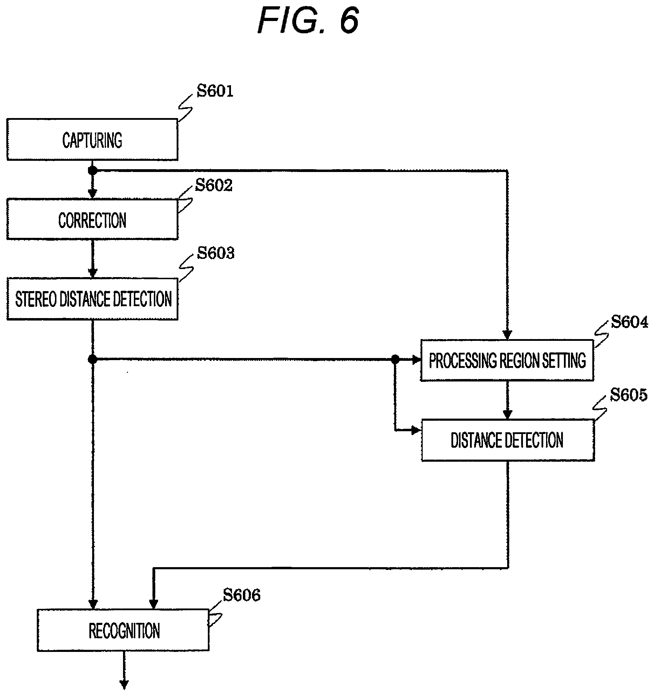

FIG. 6 is a view illustrating a processing flow of one embodiment of the object distance detection device of the present invention. First, images are captured by the imaging units 101, 102, and 103 (S601: S represents a step). As described above, the images captured by the imaging units 101 and 102, respectively, are subjected to the luminance correction, the lens distortion correction, and the horizontal alignment by the image correction unit 104 (S602). Next, the stereo distance detection unit 105 detects an object in the processing region 301 and a distance thereof (S603).

The processing region setting unit 106 cuts out a region that needs to be processed from the image captured by the imaging unit 103 based on the above detection result and outputs the region to the distance detection unit 107 (S604), and the distance of the object is detected by the distance detection unit 107 in the region including the object (S605).

Finally, the recognition unit 108 performs an object recognition process based on the object distance detection result in each processing region, and outputs the recognition result (S606). These processes are repeated for each frame, for example.

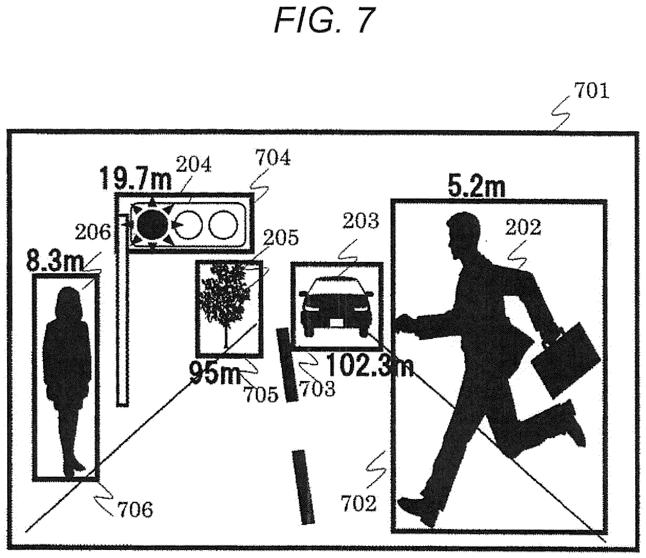

FIG. 7 is a view illustrating examples of a captured image and a recognition result in one embodiment of the object distance detection device of the present invention. Reference sign 701 denotes an image captured by the imaging unit 101 at a certain point in time, and the imaging unit 102 also captures and acquires a substantially similar image. Further, reference signs 702, 703, 704, 705, and 706 denote object recognition results, and the frame and distance display in the image are not included in the captured image but are explicitly illustrated to be superimposed on the image.

It is detected that the pedestrian 202 detected from the above processing region 302 is located at a distance of 5.2 m, the traffic signal 204 in the processing region 304 is located at the distance of 19.7 m, the street tree 205 in the processing region 305 is located at a distance of 95 m, and the pedestrian 206 in the processing region 306 is located at a distance of 8.3 m. Further, it is illustrated that the oncoming vehicle 203 detected from the processing region 403 is located at a distance of 102.3 m. In this manner, the highly accurate object distance detection can be realized over the entire captured image.

Here, in the stereo processing illustrated in the present embodiment, a parallax value decrease and the influence of error increases as the distance increases, and the accuracy of the distance detection on the far side decreases as the baseline length is shortened in order to reduce a device size. However, the distance accuracy can be maintained from the near side to the far side by obtaining the distance on the far side by the distance detection unit 107 using the above method.

According to the present embodiment, the object and the distance thereof are detected from the captured image, and the distance detection process is performed for the region including the object based on the detection result, and thus, the object recognition for the entire captured image becomes possible without increasing the processing load.

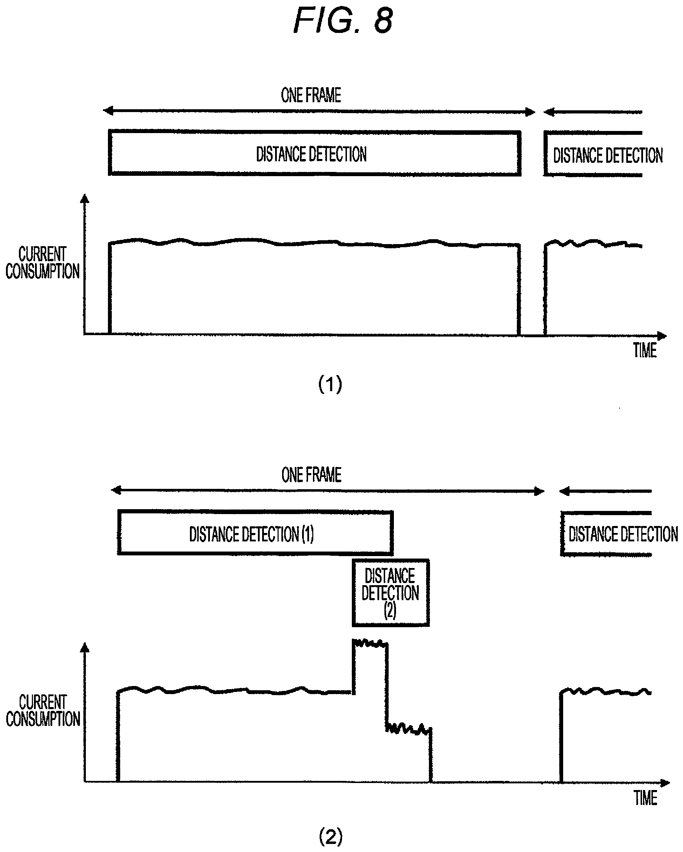

FIG. 8 is a schematic view of a current consumption waveform during a distance detection operation in one embodiment of the object distance detection device of the present invention. (1) is an operating current waveform in a case where distance detection is performed by stereo processing over the entire region of a captured image regardless of the present invention, and power is consumed over the entire frame. (2) is a current waveform during the distance detection operation in one embodiment of the object distance detection device of the present invention, and power is consumed at a limited timing within a frame in contrast to (1) so that the reduction in power consumption can be realized.

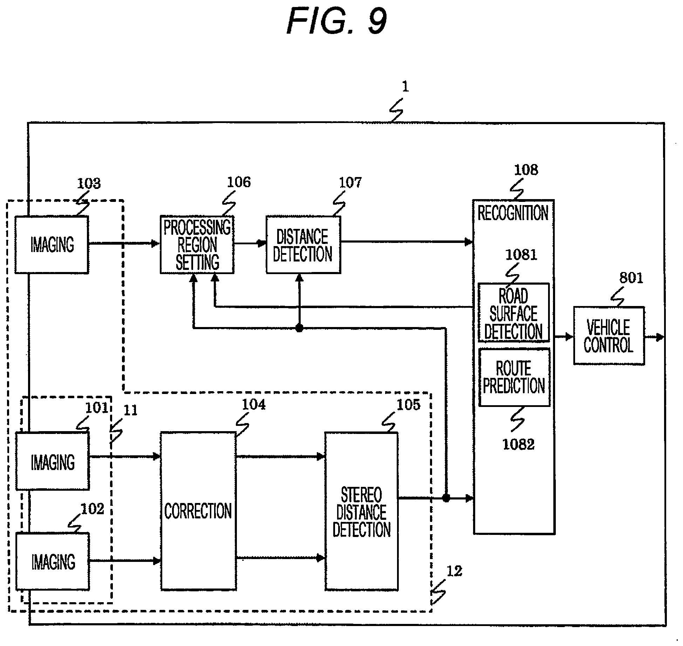

FIG. 9 is a diagram illustrating a configuration of another embodiment of the object distance detection device of the present invention. The object distance detection device 1 is mounted on a vehicle such as an automobile, and 801 denotes a vehicle control unit in the same drawing. An output of the recognition unit 108 is input to the vehicle control unit 801. Further, the recognition unit 108 includes a road surface detection unit 1081 that detects a road surface portion as a road surface region by separating the road surface portion from other objects from the distance information in the captured image and outputs the region to the processing region setting unit 106, and the recognition unit 108 further includes a travel route prediction unit 1082 that receives an input of vehicle information such as a vehicle speed and a steering angle (not illustrated) and predicts a travel route of a host vehicle and outputs the predicted travel route to the processing region setting unit 106.

The processing region setting unit 106 receives an input of the road surface information detected by the road surface detection unit 1081, and sets a processing region in the distance detection unit 107 so as to detect a distance to an object on a road surface. As a result, the exact distance to the object on the road surface is detected by the distance detection unit 107 and recognizing by the recognition unit 108, and thus, it is possible to quickly recognize an obstacle of the host vehicle and maintain safe driving. Further, a search condition setting unit 110 sets a processing region so as to detect a distance to an object on a route to be traveled obtained by the travel route prediction unit 1082, and thus, it is possible to recognize an obstacle on the travel route of the host vehicle and realize safe traveling as described above.

Further, the processing region setting unit 106 receives an input of the vehicle speed of the host vehicle (not illustrated), sets a distance threshold used at the time of setting the processing region to be far, for example, when the speed is fast, and sets the distance threshold to be close when the speed is slow. Therefore, the distance detection process can be reliably performed with the minimum processing amount, and the safety can be ensured.

The vehicle control unit 801 receives the recognition result of the recognition unit 108 and controls other devices (not illustrated) of the vehicle. The vehicle control includes lighting of a warning lamp to a driver or generation of a warning sound due to approach of a pedestrian or detection of a red traffic light and a road sign, deceleration by braking of a brake, stop control, throttle at the time of following a preceding vehicle, brake control, other steering angle control for collision avoidance and lane keeping, and the like. Such vehicle control information is output from the object distance detection device 1 to other devices (not illustrated) via an in-vehicle network.

Incidentally, FIG. 9 illustrates the example in which the vehicle control unit 801 is housed in the same housing with the object distance detection device 1, but the invention is not limited thereto, and the imaging units 101, 102, and 103 may be housed in separate housings as described above.

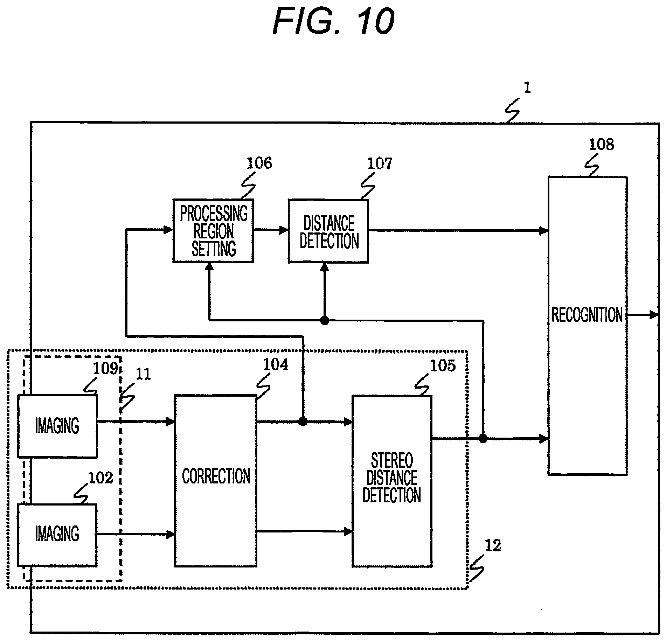

FIG. 10 is a diagram illustrating a configuration of another embodiment of the present invention. In the present embodiment, an optical lens of an imaging unit 109 as disclosed in JP 2016-207030 A has a characteristic that an inflection point in a change rate of an incident angle per image height with respect to the incident angle is at a predetermined inflection point incident angle. When such a lens is used, it is possible to acquire images of both a near region and a far region while maintaining the resolution in the far region. Therefore, an imaging angle of view of the near region of the imaging unit 109 and an imaging angle of view of the imaging unit 102 are set to be equal, and an imaging angle of view of the far region of the imaging unit 109 is set to be narrower than the above imaging angle of view. Images captured by the imaging unit 102 and the imaging unit 109 are corrected by the image correction unit 104, the image of the imaging unit 102 and the image of the near region of the imaging unit 109 are input to the stereo distance detection unit 105, and the above-described distance detection and object detection are performed. Thereafter, the image of the far region of the imaging unit 109 is input to the processing region setting unit 106, and a distance to an object in the far region is detected by the processing region setting unit 106 and the distance detection unit 107 as described above based on the detection result of the stereo distance detection unit 105. In the present embodiment, stereo distance detection and monocular distance detection can be performed with the two imaging units, and the reduction in device cost can be realized.

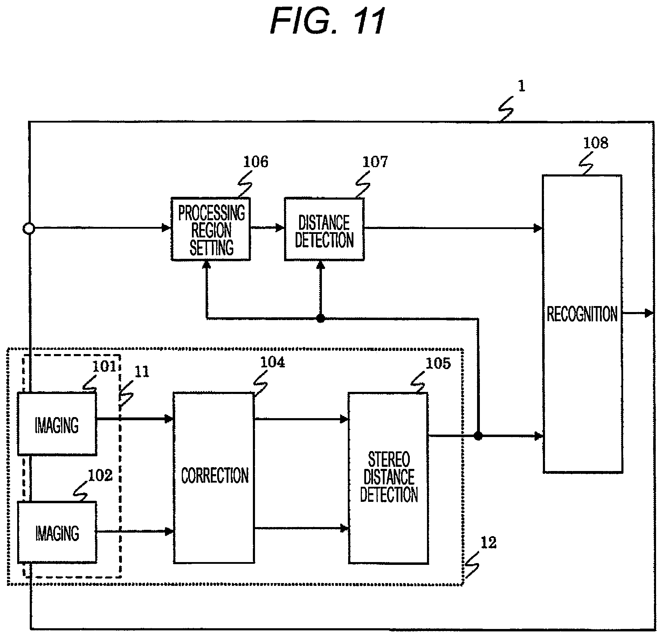

FIG. 11 is a diagram illustrating a configuration of another embodiment of the present invention. In the present embodiment, input information of the processing region setting unit 106 is obtained from a sensor that is configured using a device other than the imaging units 101, 102, and 103 and can obtain distance information. The input information is, for example, information obtained from a sensor such as a radar and an infrared sensor (not illustrated), and a distance to an object in a target range can be obtained. In the case of the radar, it is conceivable to control a processing region using a method of narrowing a radar beam direction toward an object to be processed by the processing region setting unit 106. The subsequent operations are the same as described above.

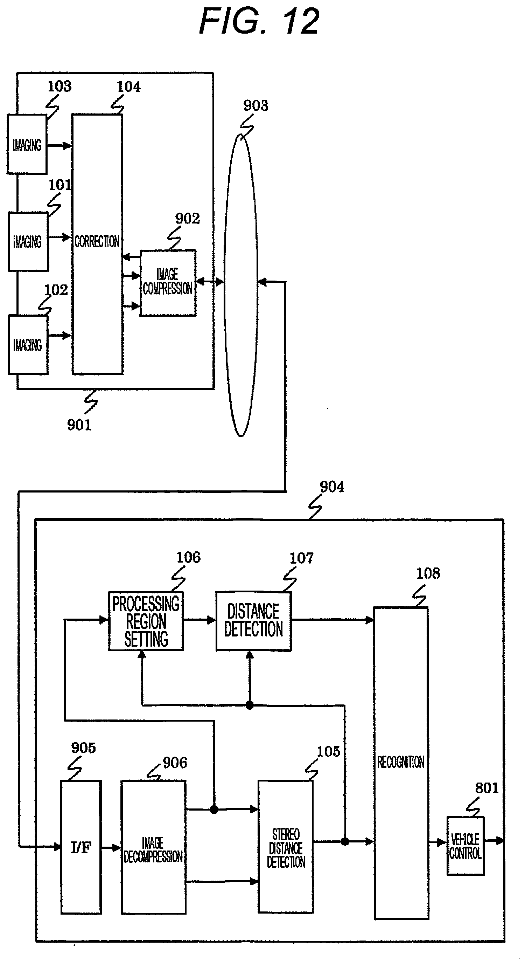

FIG. 12 is a diagram illustrating a configuration of still another embodiment of the object distance detection device of the present invention. Reference sign 901 denotes a network imaging unit, 903 denotes a local area network (LAN), and 904 denotes a control unit. The network imaging unit 901 is connected to the control unit 904 via the LAN 903. Reference sign 902 denotes an image compression/interface unit, 905 denotes a network interface unit, and 906 denotes an image decompression unit.

Images captured by the imaging unit 101, the imaging unit 102, and the imaging unit 103 are subjected to luminance correction, lens distortion correction, and horizontal alignment in the image correction unit 104. Next, the image compression/interface unit 902 compresses the images from the image correction unit 104 and transmits the compressed images to the LAN 903. As an image compression system, there is a system using an in-screen compression system in which compression is performed within one image without using temporal correlations of a plurality of images in order to reduce processing time. Further, a video compression-encoding system may be selected and switched.

The image compression/interface unit 902 generates compression-encoded data and transmits the data according to a predetermined network protocol. Incidentally, the image correction unit 104 may be provided at the subsequent stage of the image decompression unit 906 of the control unit 904, but an increase in efficiency of image compression and an increase in image quality are expected by performing the image compression after correcting a lens distortion or the like by performing the processing at the previous stage of the image compression/interface unit 902 of the network imaging unit 901. In such a case, the setting of a processing region performed by the processing region setting unit 106 is transmitted from the network interface unit 905 to the image compression/interface unit 902 and the image correction unit 104 via the LAN 903.

In the control unit 904, the network interface unit 905 receives compressed image data via the LAN 903. The compressed image data received by the network interface unit 905 of the control unit 904 is decompressed by the image decompression unit 906 to an original image for the processing region set by the processing region setting unit 106, and a distance is detected by the stereo distance detection unit 105. The subsequent processes are the same as described above.

According to the present embodiment, the processing amount on the imaging unit side can be reduced since the compressed image is transmitted via the LAN 906, and it is possible to reduce dimensional restrictions on vehicle installation due to light weight on the imaging unit side, low power consumption, and a small housing.

Incidentally, the invention is not limited to the above-described embodiments and includes various modifications. For example, the above-described embodiments have been described in detail in order to describe the present invention in an easily understandable manner, and are not necessarily limited to one including the entire configuration that has been described above. Further, some configurations of a certain embodiment can be substituted by configurations of another embodiment, and further, a configuration of another embodiment can be also added to a configuration of a certain embodiment. Further, addition, deletion or substitution of other configurations can be made with respect to some configurations of each embodiment.

Further, the above-described respective configurations may be configured such that some or the whole of them may be implemented by a processor that executes a program even when being configured by hardware. Further, only a control line and an information line considered to be necessary for the description have been illustrated, and all control lines and information lines required as a product are not illustrated. It may be considered that most of the configurations are practically connected to each other.

### Reference Signs List

1 object distance detection device
101 to 103 imaging unit
104 image correction unit
105 stereo distance detection unit
106 processing region setting unit
107 distance detection unit
108 recognition unit
109 imaging unit
201 common imaging region
202 to 206 subject
301 to 306 processing region
401, 403 processing region
702 to 706 recognition result
801 vehicle control unit
901 network imaging unit
902 image compression/interface unit
903 LAN
904 control unit
905 network interface unit
906 image decompression unit

## Claims

1. An object distance detection device comprising:
an external-environment information acquisition unit that has at least a plurality of imaging units (101 to 103);
a stereo distance detection unit (105) that performs a search for an image element corresponding to a specific image element within a reference image captured by one of the plurality of imaging units (102) within a reference image captured by another imaging unit (101) and that detects an external-environment object (203) and a distance to the object (203) based on parallax obtained by the search; and
a distance detection unit (107) that detects a distance to the object (203) with higher accuracy than the stereo distance detection unit (105) from the external-environment information acquired by the external-environment information acquisition unit based on results detected by the stereo distance detection unit (105),
wherein the distance detection unit (107) detects the distance to the object (203) acquired by the external-environment information acquisition unit based on a type of the object (203) or the distance and a size of the object (203) detected by the stereo distance detection unit (105) and comparison with object reference data.

2. The object distance detection device according to claim 1, further comprising
a processing region setting unit (106) that sets a processing region (403) including the object (203) detected by the stereo distance detection unit (105),
wherein the distance detection unit (107) detects a distance to the object (203) for the processing region (403) set by the processing region setting unit (106) within the external-environment information acquired by the external-environment information acquisition unit.

3. The object distance detection device according to claims 1 or 2, wherein the distance detection unit (107) detects the object (203) by monocular processing from an image (1003) captured by one of the plurality of imaging units (103), and detects the distance to the object (203).

4. The object distance detection device according to claims 2, wherein the processing region setting unit (106) sets the processing region (403) when the distance to the object (203) detected by the stereo distance detection unit (105) is farther than a predetermined distance threshold.

5. The object distance detection device according to claim 2, further comprising
a road surface detection means (1081) for detecting a road surface,
wherein the processing region setting unit (106) sets the processing region (403) on the road surface detected by the road surface detection means (1081).

6. The object distance detection device according to claim 2, further comprising
a travel route prediction means (1082) for predicting a travel route,
wherein the processing region setting unit (106) sets the processing region (403) on a route predicted by the travel route prediction means (1082).

7. The object distance detection device according to claim 4, wherein the processing region setting unit (106) changes and sets the distance threshold to set the processing region (403) in response to a vehicle speed.

8. The object distance detection device according to claim 2, wherein the processing region setting unit (106) does not set the processing region (403) when the object (203) detected by the stereo distance detection unit (105) is not a predetermined object.

9. The object distance detection device according to claim 2, wherein the processing region setting unit (106) does not set the processing region (403) when the distance to the object (203) is not detectable by the stereo distance detection unit (105).

10. The object distance detection device according to claim 3, wherein the plurality of imaging units (101 to 103) capture an image in which an imaging angle of view detected by the distance detection unit (107) is narrower than an imaging angle of view detected by the stereo distance detection unit (105).

11. The object distance detection device according to claim 3, wherein the plurality of imaging units (101 to 103) capture an image in which an imaging range detected by the distance detection unit (107) has a higher resolution than an imaging range detected by the stereo distance detection unit (105).

## Patentansprüche

1. Gegenstandsabstands-Detektionsvorrichtung, die Folgendes umfasst:
eine Außenumgebungsinformationen-Erfassungseinheit, die zumindest mehrere Bildgebungseinheiten (101 bis 103) aufweist;
eine Stereo-Abstandsdetektionseinheit (105), die eine Suche nach einem Bildelement durchführt, das einem spezifischen Bildelement in einem Referenzbild, das durch eine der mehreren Bildgebungseinheiten (102) aufgenommen wird, und in einem Referenzbild, das durch eine weitere Bildgebungseinheit (101) aufgenommen wird, entspricht, und die einen Gegenstand (203) in der äußeren Umgebung und einen Abstand zu dem Gegenstand (203) auf der Grundlage einer Parallaxe, die durch die Suche erhalten wird, detektiert; und
eine Abstandsdetektionseinheit (107), die einen Abstand zum Gegenstand (203) mit höherer Genauigkeit als die Stereo-Abstandsdetektionseinheit (105) aus den Außenumgebungsinformationen, die durch die Außenumgebungsinformationen-Erfassungseinheit erfasst werden, auf der Grundlage der Ergebnisse, die durch die Stereo-Abstandsdetektionseinheit (105) detektiert werden, detektiert,
wobei die Abstandsdetektionseinheit (107) den Abstand zu dem Gegenstand (203), der durch die Außenumgebungsinformationen-Erfassungseinheit erfasst wird, auf der Grundlage einer Art des Gegenstands (203) oder des Abstands und einer Größe des Gegenstands (203), die durch die Stereo-Abstandsdetektionseinheit (105) detektiert werden, und eines Vergleichs mit Gegenstandsreferenzdaten detektiert.

2. Gegenstandsabstands-Detektionsvorrichtung nach Anspruch 1, die ferner Folgendes umfasst:
eine Verarbeitungsbereichs-Einstelleinheit (106), die einen Verarbeitungsbereich (403) einstellt, der den Gegenstand (203), der durch die Stereo-Abstandsdetektionseinheit (105) detektiert wird, enthält,
wobei die Abstandsdetektionseinheit (107) einen Abstand zum Gegenstand (203) für den Verarbeitungsbereich (403) detektiert, der durch die Verarbeitungsbereichs-Einstelleinheit (106) in den Außenumgebungsinformationen eingestellt wird, die durch die Außenumgebungsinformationen-Erfassungseinheit erfasst werden.

3. Gegenstandsabstands-Detektionsvorrichtung nach den Ansprüchen 1 oder 2, wobei die Abstandsdetektionseinheit (107) den Gegenstand (203) durch monokulare Verarbeitung aus einem Bild (1003) detektiert, das durch eine der mehreren Bildgebungseinheiten (103) aufgenommen wird, und den Abstand zum Gegenstand (203) detektiert.

4. Gegenstandsabstands-Detektionsvorrichtung nach Anspruch 2, wobei die Verarbeitungsbereichs-Einstelleinheit (106) den Verarbeitungsbereich (403) einstellt, wenn der Abstand zu dem Gegenstand (203), der durch die Stereo-Abstandsdetektionseinheit (105) detektiert wird, größer als ein vorgegebener Abstandsschwellenwert ist.

5. Gegenstandsabstands-Detektionsvorrichtung nach Anspruch 2, die ferner Folgendes umfasst:
ein Straßenoberflächen-Detektionsmittel (1081) zum Detektieren einer Straßenoberfläche,
wobei die Verarbeitungsbereichs-Einstelleinheit (106) den Verarbeitungsbereich (403) auf der Straßenoberfläche einstellt, die durch das Straßenoberflächen-Detektionsmittel (1081) detektiert wird.

6. Gegenstandsabstands-Detektionsvorrichtung nach Anspruch 2, die ferner Folgendes umfasst:
ein Fahrstrecken-Vorhersagemittel (1082) zum Vorhersagen einer Fahrstrecke,
wobei die Verarbeitungsbereichs-Einstelleinheit (106) den Verarbeitungsbereich (403) auf einer Strecke einstellt, die durch das Fahrstrecken-Vorhersagemittel (1082) vorhergesagt wird.

7. Gegenstandsabstands-Detektionsvorrichtung nach Anspruch 4, wobei die Verarbeitungsbereichs-Einstelleinheit (106) als Antwort auf eine Fahrzeuggeschwindigkeit den Abstandsschwellenwert ändert und einstellt, um den Verarbeitungsbereich (403) einzustellen.

8. Gegenstandsabstands-Detektionsvorrichtung nach Anspruch 2, wobei die Verarbeitungsbereichs-Einstelleinheit (106) den Verarbeitungsbereich (403) nicht einstellt, wenn der Gegenstand (203), der durch die Stereo-Abstandsdetektionseinheit (105) detektiert wird, kein vorgegebener Gegenstand ist.

9. Gegenstandsabstands-Detektionsvorrichtung nach Anspruch 2, wobei die Verarbeitungsbereichs-Einstelleinheit (106) den Verarbeitungsbereich (403) nicht einstellt, wenn der Abstand zum Gegenstand (203) durch die Stereo-Abstandsdetektionseinheit (105) nicht detektiert werden kann.

10. Gegenstandsabstands-Detektionsvorrichtung nach Anspruch 3, wobei die mehreren Bildgebungseinheiten (101 bis 103) ein Bild aufnehmen, in dem ein Bildgebungsblickwinkel, der durch die Abstandsdetektionseinheit (107) detektiert wird, kleiner ist als ein Bildgebungsblickwinkel, der durch die Stereo-Abstandsdetektionseinheit (105) detektiert wird.

11. Gegenstandsabstands-Detektionsvorrichtung nach Anspruch 3, wobei die mehreren Bildgebungseinheiten (101 bis 103) ein Bild aufnehmen, in dem ein Bildgebungsbereich, der durch die Abstandsdetektionseinheit (107) detektiert wird, eine höhere Auflösung aufweist als ein Bildgebungsbereich, der durch die Stereo-Abstandsdetektionseinheit (105) detektiert wird.

## Revendications

1. Dispositif de détection de distance d'objet comprenant :
une unité d'acquisition d'informations d'environnement externe qui a au moins une pluralité d'unités d'imagerie (101 à 103) ;
une unité de détection de distance stéréoscopique (105) qui effectue une recherche d'un élément d'image correspondant à un élément d'image spécifique à l'intérieur d'une image de référence capturée par l'une de la pluralité d'unités d'imagerie (102) à l'intérieur d'une image de référence capturée par une autre unité d'imagerie (101) et qui détecte un objet d'environnement externe (203) et une distance à l'objet (203) sur la base d'une parallaxe obtenue par la recherche ; et
une unité de détection de distance (107) qui détecte une distance à l'objet (203) avec une précision plus élevée que l'unité de détection de distance stéréoscopique (105) à partir des informations d'environnement externe acquises par l'unité d'acquisition d'informations d'environnement externe sur la base de résultats détectés par l'unité de détection de distance stéréoscopique (105),
dans lequel l'unité de détection de distance (107) détecte la distance à l'objet (203) acquise par l'unité d'acquisition d'informations d'environnement externe sur la base d'un type de l'objet (203) ou de la distance et d'une taille de l'objet (203) détecté par l'unité de détection de distance stéréoscopique (105) et d'une comparaison à des données de référence d'objet.

2. Dispositif de détection de distance d'objet selon la revendication 1, comprenant en outre
une unité de définition de région de traitement (106) qui définit une région de traitement (403) incluant l'objet (203) détecté par l'unité de détection de distance stéréoscopique (105),
dans lequel l'unité de détection de distance (107) détecte une distance à l'objet (203) pour la région de traitement (403) définie par l'unité de définition de région de traitement (106) à l'intérieur des informations d'environnement externe acquises par l'unité d'acquisition d'informations d'environnement externe.

3. Dispositif de détection de distance d'objet selon la revendication 1 ou 2, dans lequel l'unité de détection de distance (107) détecte l'objet (203) via un traitement monoculaire à partir d'une image (1003) capturée par l'une de la pluralité d'unités d'imagerie (33), et détecte la distance à l'objet (203).

4. Dispositif de détection de distance d'objet selon la revendication 2, dans lequel l'unité de définition de région de traitement (106) définit la région de traitement (403) quand la distance à l'objet (203) détectée par l'unité de détection de distance stéréoscopique (105) est plus éloignée qu'une distance seuil prédéterminée.

5. Dispositif de détection de distance d'objet selon la revendication 2, comprenant en outre
un moyen de détection de surface routière (1081) destiné à détecter une surface routière,
dans lequel l'unité de définition de région de traitement (106) définit la région de traitement (403) sur la surface routière détectée par le moyen de détection de surface routière (1081).

6. Dispositif de détection de distance d'objet selon la revendication 2, comprenant en outre
un moyen de prédiction d'itinéraire de circulation (1082) destiné à prédire un itinéraire de circulation,
dans lequel l'unité de définition de région de traitement (106) définit la région de traitement (403) sur un itinéraire prédit par le moyen de prédiction d'itinéraire de circulation (1082).

7. Dispositif de détection de distance d'objet selon la revendication 4, dans lequel l'unité de définition de région de traitement (106) change et définit la distance seuil pour définir la région de traitement (403) en réponse à une vitesse de véhicule.

8. Dispositif de détection de distance d'objet selon la revendication 2, dans lequel l'unité de définition de région de traitement (106) ne définit pas la région de traitement (403) quand l'objet (203) détecté par l'unité de détection de distance stéréoscopique (105) n'est pas un objet prédéterminé.

9. Dispositif de détection de distance d'objet selon la revendication 2, dans lequel l'unité de définition de région de traitement (106) ne définit pas la région de traitement (403) quand la distance à l'objet (203) ne peut pas être détectée par l'unité de détection de distance stéréoscopique (105).

10. Dispositif de détection de distance d'objet selon la revendication 3, dans lequel la pluralité d'unités d'imagerie (101 à 103) capturent une image dans laquelle un angle de vue d'imagerie détecté par l'unité de détection de distance (107) est plus étroit qu'un angle de vue d'imagerie détecté par l'unité de détection de distance stéréoscopique (105).

11. Dispositif de détection de distance d'objet selon la revendication 3, dans lequel la pluralité d'unités d'imagerie (101 à 103) capturent une image dans laquelle une plage d'imagerie détectée par l'unité de détection de distance (107) a une résolution plus élevée qu'une plage d'imagerie détectée par l'unité de détection de distance stéréoscopique (105).
